Europäisches Patentamt

European Patent Office

Office européen des brevets

(19)

(11)  EP 0 396 981 B1

(12)  EUROPEAN PATENT SPECIFICATION

(45) Date of publication and mention
of the grant of the patent:
**01.07.1998  Bulletin 1998/27**

(51) Int Cl.⁶: **G02B 27/64**

(21) Application number: **90108070.5**

(22) Date of filing: **27.04.1990**

(54) **Image stabilizing apparatus**

Bildstabilisationsvorrichtung

Appareil de stabilisation d'image

(84) Designated Contracting States:
**DE FR GB**

(30) Priority:  **28.04.1989  JP 109501/89
20.07.1989  JP 189721/89**

(43) Date of publication of application:
**14.11.1990  Bulletin 1990/46**

(73) Proprietor: **CANON KABUSHIKI KAISHA
Tokyo (JP)**

(72) Inventors:
• **Kobayashi, Takashi, c/o Canon K.K.
Takatsu-ku, Kawasaki-shi, Kanagawa-ken (JP)**
• **Ogino, Shigeru, c/o Canon K.K.
Takatsu-ku, Kawasaki-shi, Kanagawa-ken (JP)**
• **Noguchi, Kazuhiro, c/o Canon K.K.
Takatsu-ku, Kawasaki-shi, Kanagawa-ken (JP)**

• **Mogi, Hirokazu, c/o Canon K.K.
Takatsu-ku, Kawasaki-shi, Kanagawa-ken (JP)**
• **Hamano, Hiroyuki, c/o Canon K.K.
Takatsu-ku, Kawasaki-shi, Kanagawa-ken (JP)**
• **Tsuji, Sadahiko, c/o Canon K.K.
Takatsu-ku, Kawasaki-shi, Kanagawa-ken (JP)**
• **Shinoda, Nobuhiko, c/o Canon K.K.
Takatsu-ku, Kawasaki-shi, Kanagawa-ken (JP)**

(74) Representative:
**Pellmann, Hans-Bernd, Dipl.-Ing. et al
Patentanwaltsbüro
Tiedtke-Bühling-Kinne & Partner
Bavariaring 4
80336 München (DE)**

(56) References cited:
**DE-A- 3 542 078          US-A- 2 829 557
US-A- 2 959 088          US-A- 3 910 693**

## Description

### BACKGROUND OF THE INVENTION

#### Field of the Invention

The present invention relates to an apparatus for preventing an image of an optical apparatus from vibrating due to unintentional movement of the hands or the like.

#### Related Background Art

There are conventionally known optical apparatuses which are provided with a function for stabilizing an image generated due to unintentional movement of the hands.

Document US-A-3 910 693 discloses a motion picture camera comprising means for supporting a reflection element so that, at the point of incidence of the collimated light beam, it can normally swing on an elevation plane and on an azimuth plane, means of gyroscopic stabilization capable of sustaining a fixed position in space when the camera receives an abrupt movement of low amplitude, and means for interconnecting the means of reflection and the means of gyroscopic stabilization, the latter controlling the reflection means through adequate motion transmission means to change the spatial position of the reflection means so that the light beam reflected therefrom to the unexposed film is not effected by the vibrations to which the camera is subjected during the use of the camera and the angle of incidence of stabilized collimated light beam remains constant on the surface of the film. The interconnection means is designed by considering the 1:2 ratio of the motion required on the main plane (elevation), as well as the 1:1 ration of the motion required on the normal plane (azimuth), multiplied on both planes by a factor proportional to that of increase or reduction of an afocal converter. The afore-mentioned electrooptic stabilization system acts as a filter of low-path type for eliminating artifacts having low amplitude and high frequency which result from brusque movement. Therefore, the time constant of the stabilizer is adapted as a function of its angle of disalignment, that is a variable ratio between the stabilizer and the reflection means provided due to the extension and reduction of the afocal converter, independent of camera movements.

Moreover, there is disclosed in the U.S. Patent Nos. USP 2959088, USP 2829557 or the like such apparatus that is provided with a movable correcting optical system to prevent an image vibration by means of its force of inertia of the correcting optical system.

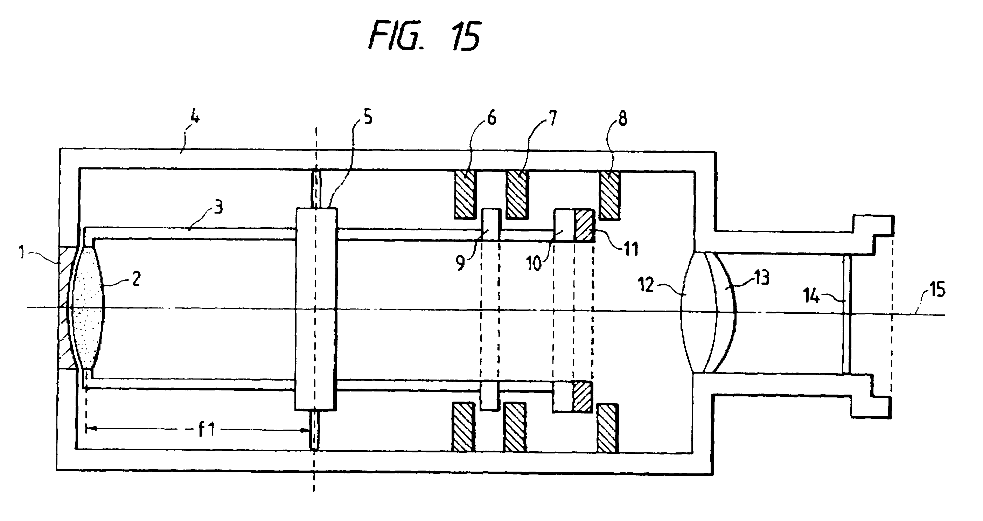

Fig. 15 shows an entire arrangement of an image stabilizing apparatus ot this type.

In Fig. 15, lenses 1 and 2 are correction optical systems for stabilizing an image of main lenses 12 and 13 which are fixed to a lens barrel 4 for forming the image on a focal surface 14. Focal length of these correcting optical system are set as follows:

Assuming that a focal length of the lens 1 which has a negative power fixed to the lens barrel 4 is $f_1$ and a focal length of the lens 2 which has a positive power supported by a movable supporting member 3 is $f_2$, the following relation is satisfied:

$$f_1 = -f_2$$

The movable supporting member 3 is supported by the lens barrel 4 at a position of said focal length distance $f_2$ $(=-f_1)$ from the principal point of the image side of the lens 2 by means of a gimbal 5 for movably supporting the movable supporting member in two axes.

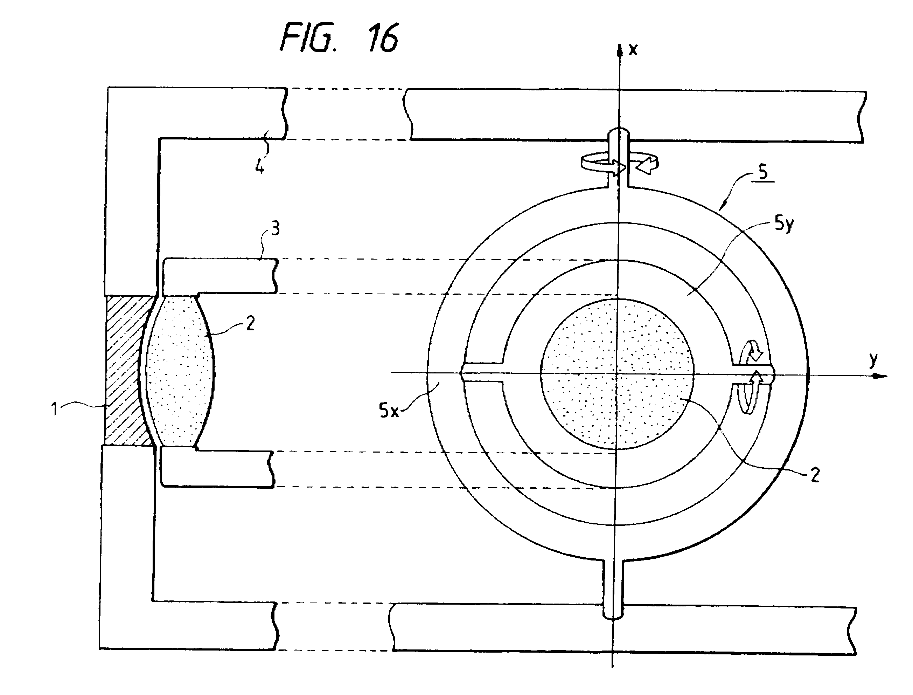

Fig. 16 shows a mechanism of said gimbal 5 for movably supporting the two axes. In Fig. 16, the movable supporting member 3 which holds the lens 2 is supported by a supporting member 5y which is allowed to rotate around the Y axis. The supporting member 5y is supported by a supporting member 5x which is allowed to rotate around the X axis perpendicular to the Y axis. Then said supporting member 5x is supported by the lens barrel 4 so as to constitute a correcting optical system having rotation freedom around the two axes.

In Fig. 15, a counter weight 10 acts as a balancer for balancing the movable supporting member 3 and is mounted on the opposite side to the lens 2 of the movable supporting member 3 with the gimbal 5 therebetween so as to keep a balance with the lens 2 in respect to the gimbal 5.

Thus, with the above-mentioned arrangement, a so-called image stabilizing optical system of an inertial pendulum type can be realized. In other words, according to the arrangement of Fig. 15, vibration of an image can be prevented in the following manner:

If the arrangement shown in Fig. 15 constitutes, for example, a telescope, inside the barrel 4 which is positioned toward an object, an optical image of said object is formed on the focal plane 14 by the main lenses 12 and 13 and the correcting optical systems 1 and 2.

If this telescope has a high magnifying power and held by human hands when in use, vibration having a frequency component in a range from 0.1 Hz to 10 Hz or around is generated on said barrel 4 due to, in particular, movement of the hands or the like, and then vibration of an image is generated.

However, according to the above arrangement, a relative displacement is generated between the lens 2 and the lens 1 for such vibration due to the inertial force of the movable supporting member 3 so that said vibration of an image can be suppressed by said relative displacement between the lens 2 and the lens 1.

Further, in Fig. 15, a member 9 mounted on the movable supporting member 3 is a non-magnetic conductor such as an aluminum chip and a damping force is generated in accordance with a speed of vibration of said barrel 4 due to a magnetic effect which is formed by magnets 6 and 7 fixed to the barrel 4. This is for generating a damping operation for preventing the movable supporting member 3 from abutting against the barrel 4 in such a case where, for example, the barrel 4 is abruptly displaced in order to change a design of the picture.

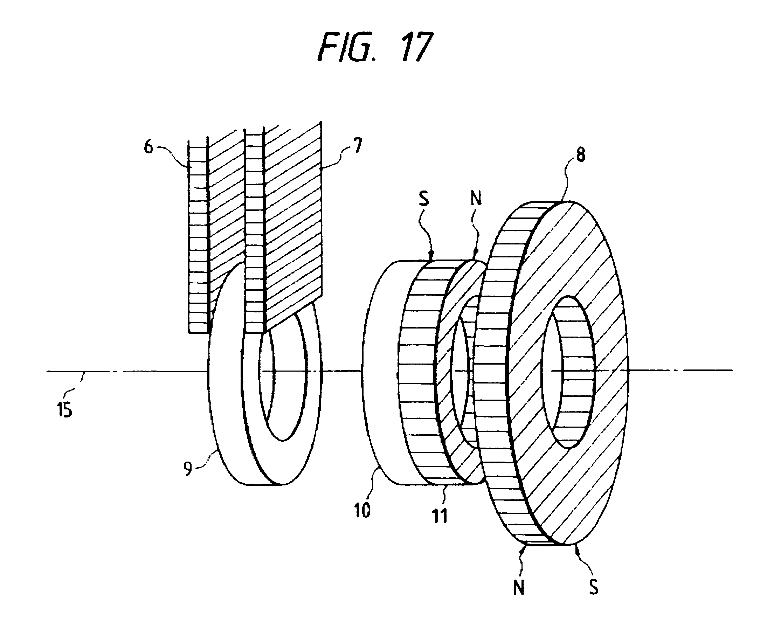

More practically, an eddy current generated from the aluminum chip 9 for the magnets 6 and 7, an enlarged view of which is shown in Fig. 17, generates a force in a direction in which an amount of displacement of the movable supporting member 3 from a movable center position where an optical axis of the lens 2 meets the optical axis of the main lenses 12 and 13 (the main optical axis 15) is made smaller so as to obtain the damping effect.

Though the magnets 6 and 7 are mounted only on an upper part of the barrel 4, other details are intentionally omitted in this figure for convenience of the explanation, and it is needless to say that similar magnets are mounted on a lower part and on the both sides of the barrel 4 to thereby effect a two-axis control.

In Fig. 15, a magnetic member 11 is integrally mounted with said counter weight 10 on the movable supporting member 3 and performs a centering operation for returning the movable supporting member 3 to the movable center position at which the optical axis of the lens 2 coincides with the main optical axis 15 due to the magnetic effect which is formed with a magnet 8 fixed to the barrel 4. Such centering operation is acted to remove a manufacturing error or a displacement corresponding to a direct current component out of the frequency components of the above-mentioned displacement so as to make the optical axis of the lens 2 meet the main optical axis 15.

In the concrete, as enlargedly shown in Fig. 17, the magnetic members 11 and the magnet 8 are constituted in such manner that they face each other with surfaces of the same polarity (the N-poles) to repel each other magnetically.

Then, since the center of said magnet 8 meets the main optical axis 15, such centering force as making the optical axis of the lens 2 meet the main optical axis 15 is generated.

Said arrangements for damping and centering improve, as described above, a performance of an image stabilizing apparatus due to the inertial pendulum system. However, on the other hand, relative displacement of the correcting optical systems (lenses 1 and 2) for correcting said image blurring is restricted by said arrangements so that the damping operation of an image stabilizing apparatus due to the inertial pendulum system is suppressed and the damping effect can not work satisfactorily.

## SUMMARY OF THE INVENTION

Taking the above mentioned defect into consideration an object of the present invention is to provide an image stabilizing apparatus of the inertial pendulum system for correcting image vibration by means of correcting optical means relatively displaceably supported in respect to a barrel.

According to the present invention, this object is accomplished by an apparatus adapted to an image stabilizing apparatus according to the appended independent claim 1.

Other objects of the present invention will be clarified with reference to the embodiments described later.

## BRIEF DESCRIPTION OF THE DRAWINGS

Fig. 1 is a view showing a structure of an image stabilizing apparatus according to an embodiment of the present invention;

Fig. 2 is a view showing a structure of a sensor shown in Fig. 1;

Fig. 3 is a view showing a torque generator shown in Fig. 1;

Fig. 4 is a view showing a structure of a control system of the apparatus of Fig. 1;

Fig. 5 is a graph showing characteristics of a control torque which is a base of the control system of Fig. 4;

Fig. 6 is an imaginary view of the control torque of Fig. 5, seen from the main optical axis;

Fig. 7 is a flowchart showing a practical operation of the control system of Fig. 4;

Fig. 8 is a graph showing characteristics of control torque when the characteristics of the control torque around the X axis are different from those of the control torque around the Y axis in the control system of Fig. 4;

Fig. 9 is an imaginary view of the control torque of Fig. 8 seen from the main optical axis side;

Fig. 10 is a view of a structure of a control system for explaining another example of a practical operation of the control system of Fig. 4;

Fig. 11 is a flowchart showing an operation of the control system of Fig. 10;

Fig. 12 is a graph showing characteristics of control torque in a case where the characteristics of control torque are different in accordance with a focal length in the control system of Fig. 10;

Figs. 13A and 13B are views of an optical structure for explaining an effect in the example of Fig. 10;

Fig. 14 is a view showing a structure of the control torque signal composition of Fig. 10;

Fig. 15 is a view showing a structure of an image stabilizing apparatus of the prior art;

Fig. 16 is a view of an enlarged portion of the support of gimbal of Fig. 11 for explaining the structure thereof; and

Fig. 17 is a view of an enlarged portion of the structure of Fig. 11.

## DETAILED DESCRIPTION OF THE PREFERRED EMBODIMENTS

The embodiments of the present invention will be described below with reference to the attached drawings.

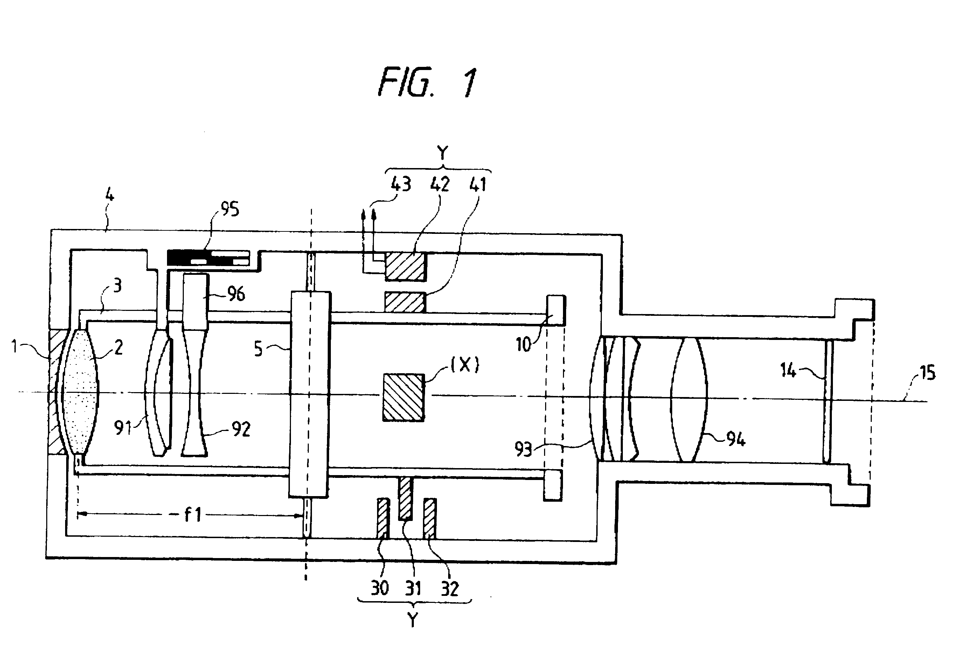

Fig. 1 shows a structure of an image stabilizing apparatus according to the present invention.

The image stabilizing apparatus of Fig. 1 is operated under the inertial pendulum system in the same way as the above-described image vibration preventing apparatus of Fig. 15. In Fig. 1, identical portions to those in Fig. 15 are given the same numerals and description thereof will be omitted.

In Fig. 1, a main imaging optical system comprises a front lens 91, a magnification lens 92 and fixed lenses 93 and 94 for forming an image. The magnifications lens 92 is mounted movably for changing a focal length by means of a movable moving ring 96. A position of said magnification lens 92 can be detected by a magnifying encoder (ENC) 95 and it can be known from an output from such ENC 95 in what state a focal length of the imaging optical system is. In this connection, the ENC 95 exemplifies a 2-bit optical reflection type.

Sensors 30, 31 and 32 are arranged on an inner wall of a barrel 4 and on a movable supporting member 3, and torque generators 41, 42 and 43 are arranged symmetrically about the axes. The X axis and the Y axis are constituted in the same way, respectively and are positioned perpendicular to each other.

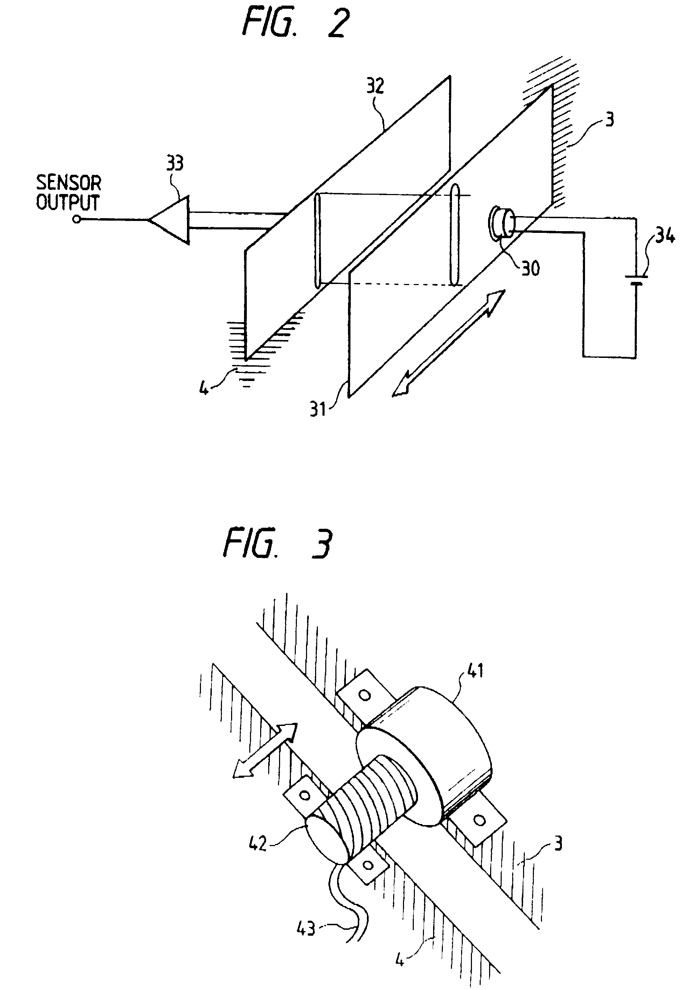

Arrangements of said sensors 30, 31 and 32 are shown in Fig. 2. These sensors comprise a light-emitting device 30 such as a LED which is mounted on an inner wall of the barrel 4, a power source 34 for said light-emitting device, a one-dimensional light-receiving position detecting device 32 for receiving light from the power source 34, such as a PSD, and a slit screen 31 mounted on the movable supporting member 3. Since the slit screen 31 which is provided between the light-emitting device 30 and the one-dimentional light-receiving position detecting device 32 moves in a direction of an arrow in Fig. 2, together with movement of the movable supporting member 3 which holds a correcting optical system or the lens 2, a signal is detected from the one-dimentional light-receiving position detecting device 32 in accordance with a vibration angle thereof and which signal is output from a sensor amplifier 33 as a displacement signal of the movable supporting member 3 in respect to the barrel 4.

Next, one example of arrangement, which is called a voice coil type, of said torque generators 41, 42 and 43 is shown in Fig. 3.

When a control signal is entered into a control input terminal 43, a magnetic contacting force (or a magnetic repulsive force) is generated between a voice coil 42 and a magnet 41 in accordance with a current amount and a polarity of the signal to thereby generate torque in a direction of the arrow in Fig. 3.

As described above, the sensors 30, 31 and 32 and the torque generators 41, 42 and 43 are arranged in such a manner that the X axis and the Y axis are arranged perpendicular to each other and can effect torque control for rotation of the movable supporting member 3 around the X axis and around the Y axis in order to perform the damping and centering operations on movement of the movable supporting member 3 together with the support of gimbals.

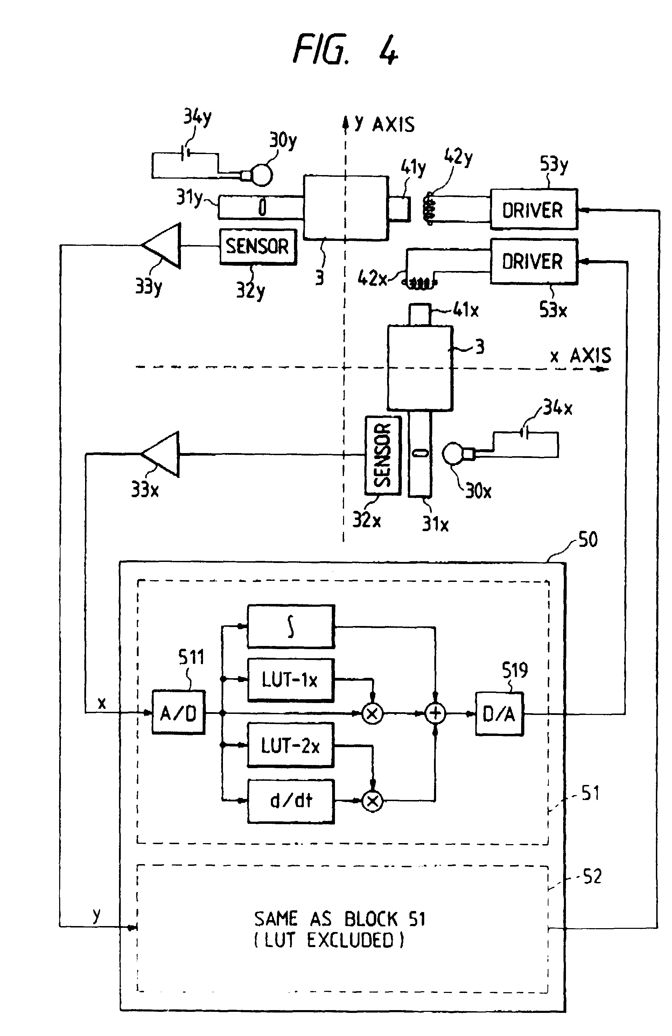

Fig. 4 shows a control system for inputting an output from said sensor amplifier 33, for controlling a drive of the torque generator 42 in accordance with a state of displacement of the movable supporting member 3 in respect to the barrel 4 and for effecting torque control for rotation of the movable supporting member 3 around said X axis and Y axis.

In Fig. 4, a displacement signal of the movable supporting member 3 in respect to the barrel 4 from the sensor amplifier 33 for rotation of said movable supporting member 3 around the X axis and the Y axis is converted into a digital signal by means of an A/D converter 511 in a control circuit 50 constituted by a microcomputer and the like, and then processed by the control circuit 50. (In Fig. 4, sensor systems 30, 31, 32, 33 and 34 for the movable supporting members 3 are represented by 30x, 31x, 32x, 33x and 34x when they are for rotation around the X axis and 30y, 31y, 32y, 33y and 34y for rotation around the Y axis.)

Then, a result of the processing by the control circuit 50 is converted into analog data by a D/A converter 519 to drive and to control the above-mentioned torque generator 42 via driving circuits 53x and 53y on the basis of said analog data (In Fig. 4, the above-mentioned torque generators 41 and 42 are represented by 41x and 42x when they are for rotation of the movable supporting member 3 around the X axis and 41y and 42y when for rotation around the Y axis.)

As a basic control operation in said control circuit 50, non-linear control torque for damping is generated by the torque generators 42x and 42y for a vibration angle of the movable supporting member 2 which is an inertial pendulum in order to satisfy two reciprocal purposes, that is, damping and prevention of an excess movement of a lens portion relating to a panning or tilting operation.

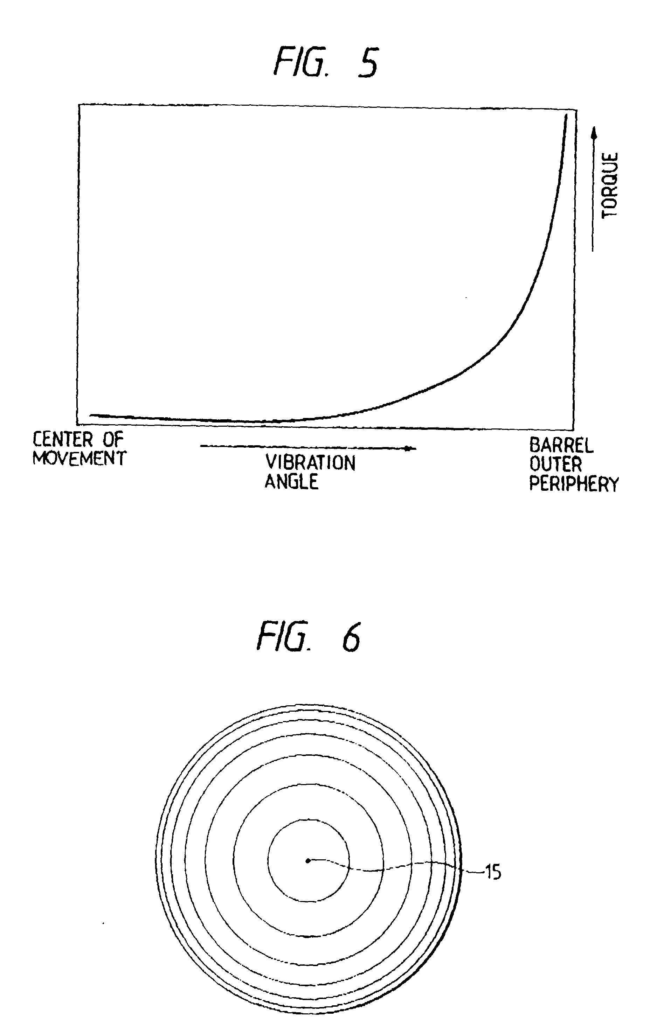

Examples of characteristics of such control torque are shown in Fig. 5.

According to the characteristics of the control torque of Fig. 5, when the movable supporting member 3 is positioned around the center of rotation in respect to the barrel 4, the torque generators 42x and 42y hardly generate torque for damping so as not to prevent the inertial pendulum from performing the damping operation.

On the other hand, when the barrel 4 is largely moved in a certain direction such as in a case of panning operation (in which the lens barrel is moved in a horizontal direction in order to change a design of the picture) or tilting operation (in which the lens barrel is moved in a vertical direction in order to change the design of photograph), if the movable supporting member 3 is greatly displaced from the center of movement by the effect of the inertial pendulum, the damping torque which increases rapidly to bring the movable supporting member 3 back to the center of rotation is generated in the torque generators 42x and 42y to thereby prevent the movable supporting member 3 from abutting against the inner wall of the barrel 4.

A torque curve in Fig. 5 can be, when seen from the direction of the main optical axis 15, imaged as shown in Fig. 6. Since one concentric circle in Fig. 6 shows a fixed amount of torque change, spaces between concentric circles become smaller when closer they come to the outer periphery or the barrel end and an inclination of the torque characteristics becomes sharper when the movable supporting member 3 is displaced more greatly from the center of movement.

In other words, the torque rises as shown as a non-linear curve in Fig. 5.

By controlling the damping torque in such a manner, the damping effect is greatly operated when the movable supporting member 3 comes close to the barrel 4 so as to prevent the movable supporting member 3 from abutting against the inner wall of the barrel 4. In other cases, such damping effect is made as small as possible so as not to prevent the damping action by the inertial pendulum.

In order to realize the control characteristics of Fig. 5, the control circuit 50 selects coefficients $K_1$ and $K_2$ with which a torque curve as shown in Fig. 5 can be obtained in accordance with a vibration angle $\theta$ of the movable supporting member 3 to be entered from, for example, the sensor amplifiers 33x and 33y from a look up table (LUT) which is stored in a memory in the control circuit 50 so as to calculate the following control function.

$$DATA = K_1 * \theta + K_2 * d\theta/dt + S\theta dt$$

where said symbol * means a multiplication.

When, said data is made to be generated as control torque in the torque generators 42x and 42y.

In said control function, the term "$K_1 * \theta$" acts as a spring term for generating a centering force in accordance with an amount of displacement from the center of movement of the movable supporting member 3, the term "$K_2 * d\theta/dt$" is a damping term having an effect on a rapid panning, tilting or other operation, and the term "$S\theta dt$" is for a centering operation and has such an effect which cancels an error generated due to various causes such as a storing error or a manufacturing error in a mass production so as to bring the movable supporting member 3 back to the center of movement. In such integral terms, since an influence on the control system is set small, a non-linear processing is not performed, different from in other terms.

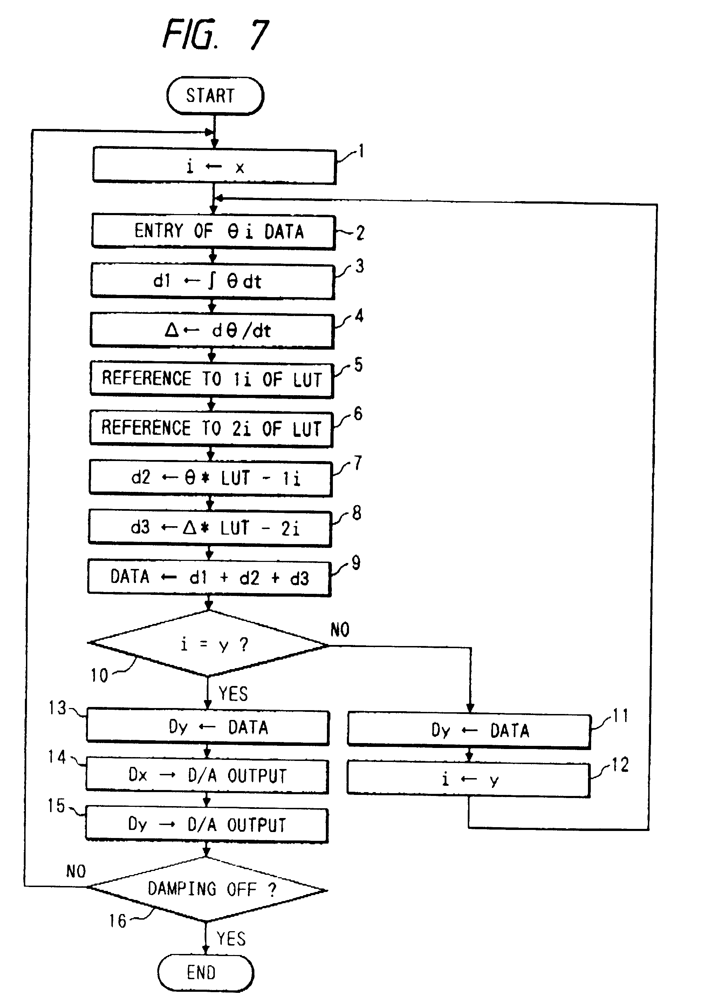

Next, an operation of the control system of Fig. 4 will be described with reference to the flow-chart in Fig. 7.

Since the two arrangements within the frames indicated by the dot lines 51 and 52 of the control system 50 in Fig. 4 are the same except the coefficient data of said LUT, details of the arrangement within the frame of the dot line 52 are omitted for simplification.

Besides, among the arrangement within the frame of the dot line 51, parts other than the A/D converter 511 and the D/A converter 519 show details of the processing in the control circuit 50 in the form of hardware.

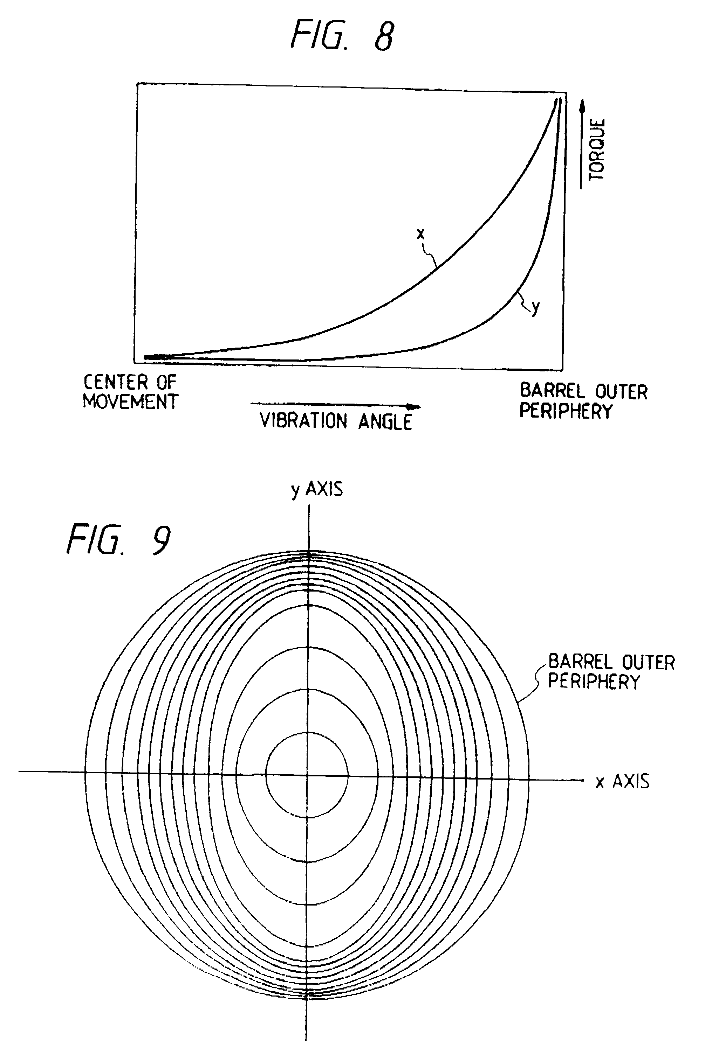

In this embodiment, the coefficients $K_1$ and $K_2$ of said control function is set in such a manner that for the non-linearity of said control torque, the control torque for rotation around the X axis (the vertical axis) becomes stronger than that for rotation around the Y axis (the horizontal axis) together with displacement of the movable supporting member 3 from the center of movement as shown in Fig. 8.

That is, it is arranged that weaker control torque for bringing the movable supporting member 3 back to the center position of movement is given for rotation around the Y axis than for that around X axis. An image of such situation seen from the direction of the main optical axis 15 is shown in Fig. 9. In Fig. 9, one concentric circle shows a predetermined amount of a torque change.

Because of such arrangement, when an ordinary optical apparatus such as a cam coder is supposed to be used, the rotation around the X axis of the movable supporting member 3 is made suitable for the panning operation in comparison with the rotation around the Y axis taking into consideration a condition of use of the apparatus or of generation of unintentional vibration of the hands. On the contrary, the rotation around the Y axis is made suitable for the damping action in comparison with the rotation around the X axis.

In other words, when an ordinary optical apparatus such as a cam coder is supposed, it is known that the frequency of panning operations in a horizontal direction is generally high, while the frequency of tilting operations in a vertical direction is low.

It is also found from measurement data, etc., that the hands of an amateur user vibrate in a vertical direction a little more greatly than in a horizontal direction.

Taking the above-mentioned conditions into consideration, it is arranged that the control torque, which is a counter-measure to a great movement such as a panning operation and has a negative effect on the firstly aimed damping operation as described before, is given for rotation of the movable supporting member 3 around the Y axis more greatly than that around the X axis so as to make the rotation of the movable supporting member 3 around the X axis more suitable for the panning operation than the rotation around the Y axis and to make the rotation around the Y axis more suitable for the damping effect than the rotation around the X axis.

Thus, it is arranged that the control torque is given effectively without disturbing the damping operation.

The above-mentioned operations will be described below in accordance with the procedures of the control system in Fig. 7.

Step 01: In order to calculate a control torque signal for rotation around the X axis of the movable supporting member 3 (in a horizontal direction), designate the processing mode i as X.

Step 02: Enter an output $\theta$ from the sensor amplifier 33x (hereinafter called "$\theta x$") according to a vibration angle of the movable supporting member 3 around the X axis via the A/D converter 511 as digital data.

Step 03: Integrate the above data $\theta x$ ($S\theta x d\theta$) to obtain data d1.

Step 04: Differentiate the above data $\theta x$ ($d\theta x/d\theta$) to obtain data $\Delta$.

Step 05: Read the coefficient $K_1$ for said control function corresponding to the above $\theta x$ out of a LUT-1x which stores the coefficient $K_1$ for obtaining the control torque of Fig. 8 for rotation around the x axis of the movable supporting member 3.

Step 06: Read the coefficient $K_2$ for said control function corresponding to the above $\theta x$ out of a LUT-2x which stores the coefficient $K_2$ for obtaining the control torque of Fig. 8 for rotation around the X axis of the movable supporting member 3.

Step 07: Multiply the above $\theta x$ by the coefficient $K_1$ thus read to make it data d2.

Step 08: Multiply the above $\Delta$ by the coefficient $K_2$ thus read to make it data d3.

Step 09: Add the above data d1, d2 and d3 together to temporarily store as "DATA". That is, a result of calculation of said control function can be obtained by the following expression.

$$DATA = d1 + d2 + d3$$

$$= K_1 {}^* \theta x + K_2 {}^* d\theta x/dt + S\theta x dt$$

Step 10: Judge whether the current processing mode i is relating to a rotation around the X axis or a rotation around the Y axis of the movable supporting member 3.

If the current processing is in an odd time, the current processing mode i is for rotation around the X axis (in case of No) and the processing advances to Step 11.

If in an even time, it i for the Y axis (in case of YES) and the processing advances to Step 13.

Step 11: Store "DATA" which is a result of calculation in DX as control torque data in a horizontal direction.

Step 12: Change the processing mode from i to y and return the processing to Step 02. Next, perform the processing for calculation of a control torque signal for rotation around the Y axis (in a vertical direction of the movable supporting member 3 in the similar way to that for the above processing for the X axis.

In this case, however, in Step 05, the coefficient $K_1$ corresponding to the vibration angle $\theta$ of the movable supporting member 3 around the Y axis (hereinafter called "$\theta y$" is read out of a LUT-1y which stores the coefficient $K_1$ of said control function for obtaining the control torque of Fig. 8 for rotation around the Y axis of the movable supporting member 3, while in Step 06 the coefficient $K_2$ for said control function corresponding to the vibration angle $\theta y$ of the movable supporting member 3 around the Y axis is read out of a LUT-2y which stores the coefficient $K_2$ for obtaining the control torque of Fig. 8 for rotation around the Y axis of the movable supporting member 3.

Step 13: Store "DATA" which is a result of calculation as control data in a vertical direction.

Step 14: Output the data "DX" from the D/A converter 519x to a driving circuit 53x to effect torque control on rotation around the X axis of the movable supporting member 3.

Step 15: Output the data "DY" from the D/A converter 519y to the driving circuit 53y to effect torque control on rotation around the Y axis of the movable supporting member 3 on the basis of the data "DY".

Step 16: Judge whether an image vibration correcting operation should be terminated or not.

If it should be terminated (if Yes), terminate the operation, and if it should be continued (if No), return the processing to Step 01 to repeat the above operation to the end.

In such a manner, when the movable supporting member 3 comes close to the inner wall of the barrel 4 due to the panning or tilting operation, torque having such characteristics as shown in Fig. 8 is generated by the torque generators 41x, 42x and 43x around the X axis and by the torque generators 41y, 42y and 43y around the Y axis so as to return the movable supporting member 3 to the center of rotation.

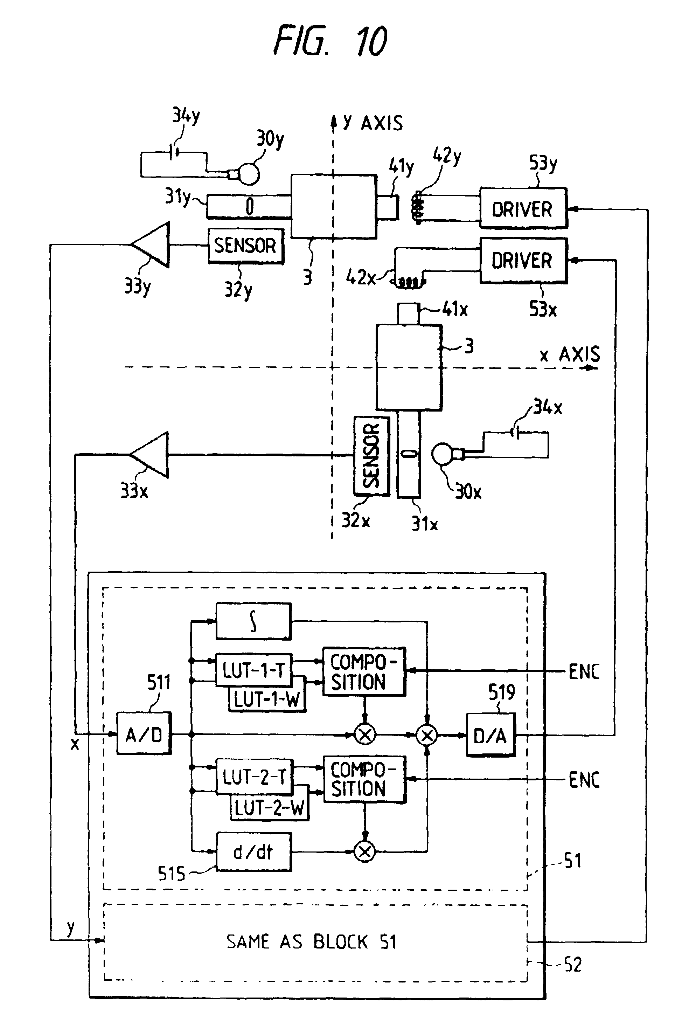

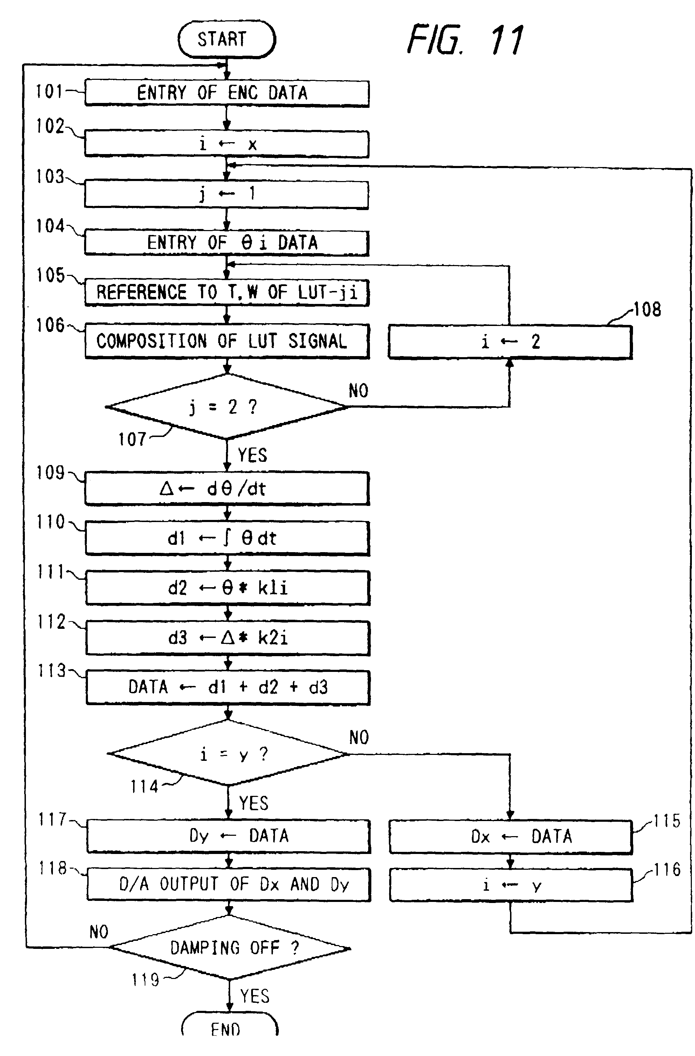

Next, another example of the operation of the control system in Fig. 4 will be described with reference to the control system of Fig. 10 and the flowchart of Fig. 11 thereof.

In this example, only a manner of determining a coefficient relating to the above-mentioned control for calculating said control torque is different from that in the control system of Fig. 4. Portions other than that are identical to those in the control system of Fig. 4 and are given the same numbers as those in Fig. 4, and description of which portions will be omitted.

Since the two arrangements in the frames indicated by the dot lines 51 and 52 in the control system 50 in Fig. 4 are identical to each other except the above-mentioned coefficient data of the LUTs, details of one arrangement (in the frame indicated by the dot line 52) are omitted for simplification. Among the arrangement within the frame 51, parts other than the A/D converter 511 and the D/A converter 519 show details of the processing in the control circuit 50 in the form of hardware.

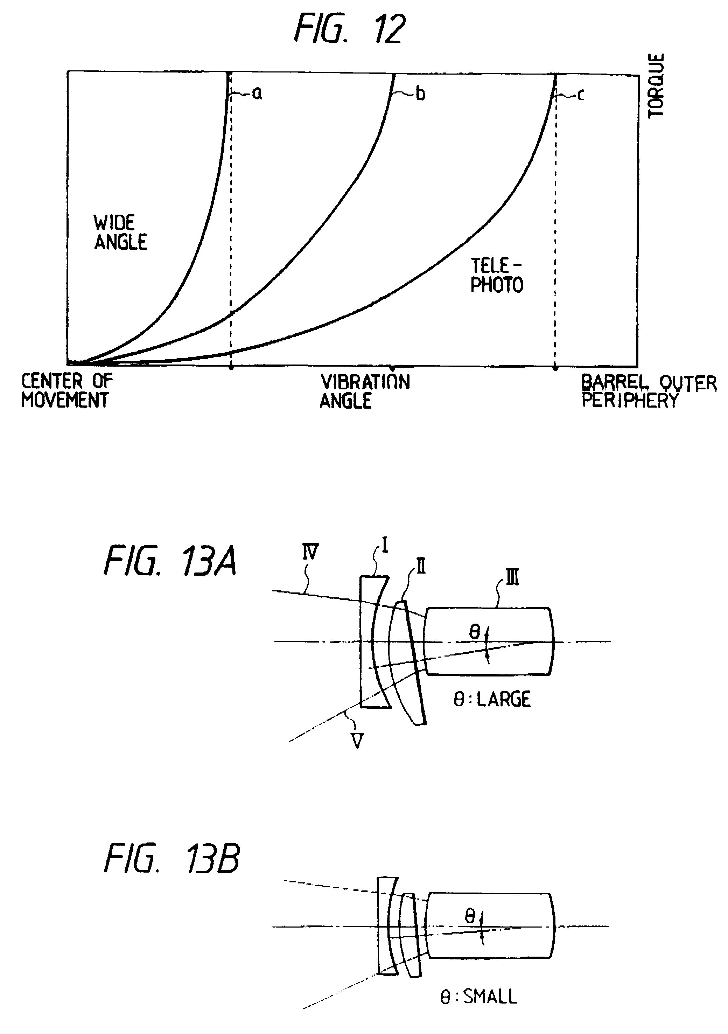

The present example is characterized in that said control torque is given for a wide angle more strongly than for a telescope in accordance with an output from a focal length encoder (ENC) 95, which is shown in Fig. 12. In Fig. 12, with a change of the focal length from the telescopic end (a long focal length) to the wide angle end (a short focal length), the control torque curve is changed to have non-linear characteristics to which stronger torque is given, as (c) to (b), and to (a).

In order to do so, there are set in the control circuit 50, the coefficients $K_1$ and $K_2$ of said control function according to the vibration angle $\theta$ of the movable supporting member 3 for giving a torque curve (a) at the wide angle end to the LUT, and the coefficients $K_1$ and $K_2$ of said control function according to the vibration angle $\theta$ of the movable supporting member 3 for giving a torque curve (c) at the telescopic end. Then, after being selected according to the vibration angle $\theta$ of the movable supporting member 3, these coefficients are compositively calculated on the basis of a value of the ENC 95 to obtain such a torque curve as mentioned above and then become the coefficients $K_1$ and $K_2$ for said control function.

In other words, the control torque, which is originally a counter measure to a great action such as a panning operation and has a negative effect on damping or the primary object, is made suitable for damping action with characteristics at telephotographing made weaker than at wide-angle photographing to be adopted for a condition of use of the optical apparatus, since it is known that unintentional vibration of the hands is generally more remarkable when a photo is taken with a telescope by the hands than with a wide angle.

Due to such arrangement, a damping optical apparatus can be compact and lightweight as a whole without spoiling the damping characteristics around the telescopic end.

This point will be described a little more in detail.

In Figs. 13A and 13B, numerals I and II respectively denote first and second lens groups of a correcting optical system, similar to the lenses 1 and 2 in Fig. 1, III a main image pickup system, and IV and V respectively denote light beams outside the axis.

Fig. 13A shows a state in which an amount of vibration for damping of the second group is large, while Fig. 13B shows a state in which such amount is small.

A size of each lens for the first lens group and the second lens group of the damping optical system is determined on the basis of a height at which the light beams IV and V outside the axis pass through the lens system.

Therefore, as shown in Figs. 13A and 13B, since the height at which the light beams outside the axis passes through the optical system becomes lower when the vibration angle $\theta$ is small than when the vibration angle $\theta$ is large, a size of the optical system can be made smaller.

The light beams outside the axis for determining the size of the optical system are normally light beams which form an image at the maximum image height at the wide angle end or in a zoom area near the wide angle end.

If light beams of the vibration angle is secured to a certain degree around the wide angle end, a sufficient damping range can be obtained, since the image angle becomes small around the telescopic end.

Accordingly, if the vibration angle at damping around the wide angle end is made smaller than that around the telescopic end due to said torque characteristics, the damping optical apparatus can be compact and lightweight as a whole without spoiling the damping characteristics around the telescopic end.

Description will be made below on an operation of the above-mentioned control system of Fig. 11 with reference to the flowchart in Fig. 11.

Step 101: Enter a value of the ENC 95 (ENC data) for detecting the focal distance.

Step 102: Specify the processing mode i as X in order to calculate a control torque signal for rotation around the X axis of the movable supporting member 3.

Step 103: Set the LUT selection mode j = 1, and select which LUT storing a coefficient of said control function is to be used.

Step 104: Enter the output $\theta x$ from the sensor amplifier 33x according to a vibration angle of the movable supporting member 3 around the X axis as digital data via the A/D converter 511.

Step 105: Read the coefficients $K_1 w$ and $K_1 t$ which corresponds to said $\theta x$ out of LUT-1x-W and LUT-1x-T which store the coefficient $K_1$ of said control function for obtaining the control torque curve (a) at the wide angle end and the control torque curve (b) at the telescopic end as shown in Fig. 12 for rotation of the movable supporting member 3 around the X axis due to setting of the LUT selection mode j = 1 in Step 103.

Step 106: Obtain the coefficient $K_1$ of said control function for the current focal length by a composition calculation according to the value of said ENC 95 for said coefficients $K_1 w$ and $K_1 t$.

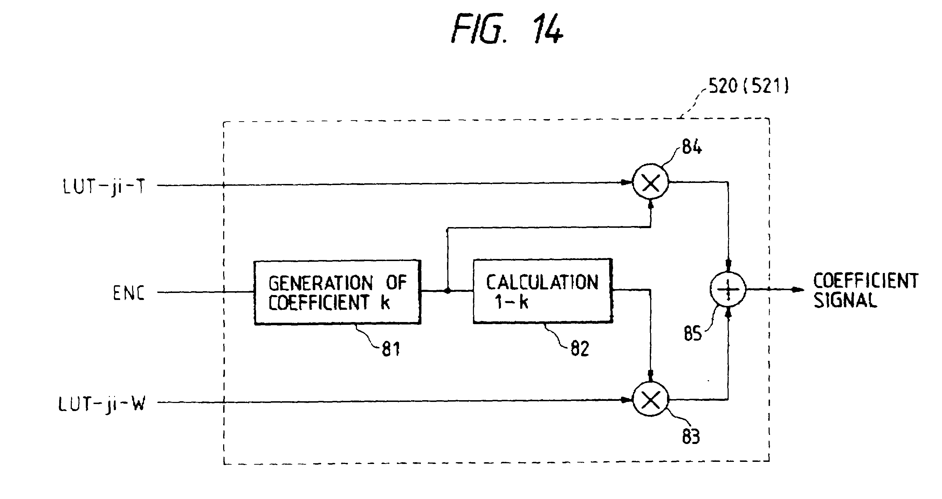

An example of such composition calculation is shown in the form of hardware in Fig. 14.

In Fig. 14, the composition calculator 520 (as well as the composition calculator 521) comprises a coefficient generator 81 for generating the coefficient k corresponding to a resolving power of the ENC 95, a calculator 82 for generating a complementary number 1-k to 1, and multipliers 84 and 83 for calculating expressions, $K_1 T * k$ and $K_1 W * (1-k)$, and outputs the coefficient $K_1$ corresponding to a focal length via an adder 85 for adding outputs from said multipliers.

In accordance with an output from the ENC 95, LUTs of the same number as the steps of the ENC (resolving power) may be prepared so that said composition calculation may be omitted.

Step 107: Confirm that the processing is finished both for setting of 1 and 2 for the LUT selection mode j.

If it is not finished (j = 1), advance to Step 108.

Step 108: In Step 108, reset LUT selection mode j = 2 and return to Step 105. Then, on the basis of the setting of the LUT selection mode j = 2, read the coefficients $K_2W$ and $K_2T$ corresponding to said $\theta x$ out of LUT-2x-W and LUT-2x-T which store the coefficient $K_2$ of said control function for obtaining the control torque curve (a) at the wide angle end and the control torque curve (b) at the telescopic end as shown in Fig. 12 for rotation of the movable supporting member 3 around the X axis, so as to obtain the coefficient $K_2$ of said control function due to said composition calculation in Step 6.

Step 109: Differentiate said $\theta x$ (d$\theta$/d$\theta$) to obtain data $\triangle$.

Step 110: Integrate said $\theta x$ (S$\theta$xd$\theta$) and multiply it by the constant $K_3$ to obtain data d1.

Make the coefficient $K_3$ a fixed small value to set the influence on the control system low. Then do not perform the non-linear operation unlike with the other coefficients $K_1$ and $K_2$.

Step 111: Multiply said $\theta x$ by the coefficient $K_1$ which has been obtained beforehand to obtain data d2.

Step 112: Multiply said $\triangle$ by the coefficient $K_2$ which has been obtained beforehand to obtain data d3.

Step 113: Add said data d1, d2 and d3 together to be temporarily stored as "DATA".

That is, a result of calculation of said control function can be obtained by the following expression

$$DATA = d1 + d2 + d3$$

$$= K_1{}^*\theta x + K_2{}^*d\theta x/dt + K_3{}^*S\theta xdt$$

Step 114: Judge whether the current processing mode i is for rotation around the X axis or around the Y axis of the movable supporting member 3.

If the current processing is in an odd time, that the current processing mode i is for rotation around the X axis (in case of No) and the processing advances to Step 115, and if in an even time, it is for rotation around the Y axis (in case of Yes) and the processing advances to Step 117.

Step 115: Store "DATA" which is a result of calculation in DX as control torque data for rotation around the X axis.

Step 116: Change the processing mode i to y to return to Step 102, and then perform a processing for calculation of a control torque signal for rotation around the y axis of the movable supporting member 3 in the same manner as for rotation around the X axis.

In this case, however, in Step 105 the coefficients $K_1w$ and $K_1t$ corresponding to the vibration angle $\theta$ of the movable supporting member 3 around the Y axis (hereinafter called "$\theta y$") is read out of LUT-1y-W and LUT-1y-T which store the coefficient $K_1$ of said control function for obtaining a control torque curve (a) at the wide angle end and a control torque curve (b) at the telescopic end as shown in Fig. 12 for rotation of the movable supporting member 3 around the Y axis, while the coefficients $K_1w$ and $K_1t$ corresponding to said $\theta y$ is read out of LUT-zy-W and LUT-zy-T which store the coefficient $K_2$ of said control function for obtaining a control torque curve (a) at the wide angle end and a control torque curve (b) at the telescopic end as shown in Fig. 12.

Step 117: Store "DATA" which is a result of calculation in Dy as control torque data for rotation around the Y axis.

Step 118: Output the control torque data Dx and Dy to the driving circuits 53x and 53y via the D/A converter 519 as torque control signals to effect torque control on rotation of the movable supporting member 3 around the X axis and the Y axis.

Step 119: Judge whether an image vibration correcting operation may be terminated or not.

If it may be terminated (if Yes), terminate the operation. Otherwise (if No), return to Step 101 to repeat the above operation to the end.

In such a manner, according to a torque curve of said control function for giving the stronger torque when the focal distance is from the telescopic end to the wide angle end, when the movable supporting member 3 comes close to the inner wall of the barrel 4 due to the panning or tilting operation, the torque which increases in a non-linear form for returning the movable supporting member to the central position of rotation is generated in the torque generators 41x, 42x and 43x for rotation of the X axis and in the torque generators 41y, 42y and 43y for rotation of the Y axis, whereby the movable supporting member 3 is returned to the center of rotation.

The foregoing embodiments employ an image stabilization apparatus of the inertial pendulum type. However, it is apparent that the present invention is applicable to other type of the image stabilization apparatus.

**Claims**

1. An apparatus adapted to an image stabilizing apparatus having a movable element (2, 3) for stabilizing the image, detecting means (30 to 32) for detecting displacement of said movable element and operating means (41 to 43) for applying a force to said movable element with a predetermined characteristic in accordance with the displacement of said movable element detected by said detecting means, wherein the force is directed in a direction opposite to the direction in which said movable element is operated for the image stabilizing;

   **said apparatus being characterized by**

   changing means (51, 52) for changing the predetermined force characteristic of said operating means, wherein said changing means (51, 52) performs a first changing operation for changing the predetermined characteristic in accordance with a condition of optical imaging means (91, 92) which form an image to be stabilized by the image stabilizing apparatus, or a second changing operation for applying the force with a first characteristic in a first direction and for applying the force with a second characteristic different from the first characteristic in a second direction different from the first direction.

2. An apparatus according to claim 1, characterized in that said detecting means (30 to 32) includes means (30 to 32) for detecting a displacement with respect to the center of movement of said movable element, and said operating means (41 to 43) includes means (41 to 43) for applying the force in accordance with the detected displacement.

3. An apparatus according to claim 1 or 2, characterized in that

said detecting means (30 to 32) includes support means (4) for movably supporting said movable element (2, 3) and means (30 to 32) for detecting a relative movement of said movable element (2), and said operating means (41 to 43) includes means (41 to 43) for applying the force in accordance with the relative movement.

4. An apparatus according to claim 3, characterized in that said changing means (51, 52) includes means (51, 52) for further changing the predetermined characteristic in accordance with a magnification setting state of the optical means (91, 92) for determining the magnification of the image.

5. An apparatus according to any of preceding claims 1 to 4 characterized in that

said changing means (51, 52) includes means (51, 52) for changing a first operational characteristic and a second operational characteristic, wherein in the first operational characteristic, said operating means applies the predetermined force when said movable element is in a first displacement state, and wherein in the second operational characteristic, said operating means applies the predetermined force when said movable element is in a second displacement state different from the first displacement state.

6. An apparatus according to claim 5, characterized in that

said changing means (51, 52) includes means (51, 52) for changing a first operational characteristic and a second operational characteristic, wherein in the first operational characteristic, said operating means applies a force having a predetermined magnitude when said movable element is in a first displacement state, and wherein in the second operational characteristic, said operating means applies a force having a predetermined magnitude when said movable element is in a second displacement state different from the first displacement state.

7. An apparatus according to any of preceding claims 1 to 6, characterized in that

said movable element (2, 3) includes optical means (2).

8. An apparatus according to any of preceding claims 1 to 7, characterized in that

said movable element (2, 3) includes means for correcting an image blur by operating.

9. An image stabilizing apparatus as incorporating an apparatus as claimed in any one of claims 1 to 8.

10. An optical equipment as incorporating an apparatus as claimed in any one of claims 1 to 9.

**Patentansprüche**

1. Eine an eine Bildstabilisiervorrichtung angepaßte Vorrichtung besitzt ein bewegbares Element (2, 3), um das Bild zu stabilisieren, Ermittlungseinrichtungen (30 bis 32), um eine Verlagerung des genannten bewegbaren Elements zu ermitteln, und Betätigungsorgane (41 bis 43), um an dem genannten bewegbaren Element eine Kraft mit einer vorbestimmten Eigenschaft in Übereinstimmung mit der durch die erwähnten Ermittlungseinrichtungen ermittelten Verlagerung des genannten bewegbaren Elements aufzubringen, wobei die Kraft in einer zu der Richtung, in welcher das genannte bewegbare Element für die Bildstabilisierung betätigt wird, entgegengesetzten Richtung orientiert ist; die besagte Vorrichtung ist gekennzeichnet durch

- Änderungsmittel (51, 52), um die Kraft mit vorbestimmter Eigenschaft der besagten Betätigungsorgane zu ändern, wobei
- die genannten Änderungsmittel (51, 52) einen ersten Änderungsvorgang ausführen, um die vorbestimmte Eigenschaft in Übereinstimmung mit einem Zustand von optischen Abbildungsgliedern (91, 92), die eine durch die Bildstabilisiervorrichtung zu stabilisierende Abbildung erzeugen, zu verändern, oder einen zweiten Änderungsvorgang ausführen, um die Kraft mit einer ersten Eigenschaft in einer ersten Richtung aufzubringen und um die Kraft mit einer zur ersten Eigenschaft unterschiedlichen zweiten Eigenschaft in einer von der ersten Richtung abweichenden zweiten Richtung zur Wirkung zu bringen.

2. Eine Vorrichtung nach Anspruch 1, dadurch gekennzeichnet, daß die erwähnten Ermittlungseinrichtungen (30 bis 32) Mittel (30 bis 32) enthalten, um eine Verlagerung in bezug auf das Bewegungszentrum des genannten bewegbaren Elements zu ermitteln, und daß die besagten Betätigungsorgane (41 bis 43) Mittel (41 bis 43) enthalten, um die Kraft in Übereinstimmung mit der ermittelten Verlagerung zur Wirkung zu bringen.

3. Eine Vorrichtung nach Anspruch 1 oder 2, dadurch gekennzeichnet, daß die erwähnten Ermittlungseinrichtungen (30 bis 32) ein Trägerbauteil (4), um das genannte bewegbare Element (2, 3) beweglich zu lagern, sowie Mittel (30 bis 32), um eine Relativbewegung des genannten bewegbaren Elements zu ermitteln, enthalten und daß die besagten Betätigungsorgane (41 bis 43) Mittel (41 bis 43) einschließen, um die Kraft in Übereinstimmung mit der Relativbewegung zur Wirkung zu bringen.

4. Eine Vorrichtung nach Anspruch 3, dadurch gekennzeichnet, daß die genannten Änderungsmittel (51, 52) Elemente (51, 52) für eine weitere Änderung der vorbestimmten Eigenschaft in Übereinstimmung mit einem Vergrößerungseinstelzustand der optischen Glieder (91, 92) enthalten, um die Vergrößerung der Abbildung zu bestimmen.

5. Eine Vorrichtung nach einem der vorhergehenden Ansprüche 1 bis 4, dadurch gekennzeichnet, daß die genannten Änderungsmittel (51, 52) Elemente (51, 52) enthalten, um eine erste Funktionseigenschaft sowie eine zweite Funktionseigenschaft zu ändern, wobei die besagten Betätigungsorgane in der ersten Funktionseigenschaft die vorbestimmte Kraft zur Wirkung bringen, wenn sich das genannte bewegbare Element in einem ersten Verlagerungszustand befindet, und wobei die besagten Betätigungsorgane in der zweiten Funktionseigenschaft die vorbestimmte Kraft zur Wirkung bringen, wenn sich das genannte bewegbare Element in einem zum ersten Verlagerungszustand unterschiedlichen zweiten Verlagerungszustand befindet.

6. Eine Vorrichtung nach Anspruch 5, dadurch gekennzeichnet, daß die genannten Änderungsmittel (51, 52) Elemente (51, 52) enthalten, um eine erste Funktionseigenschaft sowie eine zweite Funktionseigenschaft zu ändern, wobei die besagten Betätigungsorgane in der ersten Funktionseigenschaft eine Kraft mit einer vorbestimmten Größe zur Wirkung bringen, wenn sich das genannte bewegbare Element in einem ersten Verlagerungszustand befindet, und wobei die besagten Betätigungsorgane in der zweiten Funktionseigenschaft eine Kraft mit einer vorbestimmten Größe zur Wirkung bringen, wenn sich das genannte bewegbare Element in einem zum ersten Verlagerungszustand unterschiedlichen zweiten Verlagerungszustand befindet.

7. Eine Vorrichtung nach einem der vorhergehenden Ansprüche 1 bis 6, dadurch gekennzeichnet, daß das genannte bewegbare Element (2, 3) optische Glieder (2) enthält.

8. Eine Vorrichtung nach einem der vorhergehenden Ansprüche 1 bis 7, dadurch gekennzeichnet, daß das genannte bewegbare Element (2, 3) Glieder enthält, um bei einer Betätigung eine Bildunschärfe zu korrigieren.

9. Eine Bildstabilisiervorrichtung, in die eine Vorrichtung, wie sie in irgendeinem der Ansprüche 1 bis 8 beansprucht ist, eingegliedert ist.

10. Ein optisches Gerät, in das eine Vorrichtung, wie sie in irgendeinem der Ansprüche 1 bis 9 beansprucht ist, eingegliedert ist.

**Revendications**

1. Appareil adapté pour un dispositif de stabilisation d'image ayant un élément mobile (2, 3) pour stabiliser l'image, des moyens de détection (30 à 32) destinés à détecter un déplacement dudit élément mobile et des moyens de manoeuvre (41 à 43) destinés à appliquer une force audit élément mobile avec une caractéristique prédéterminée conformément au déplacement dudit élément mobile détecté par lesdits moyens de détection, dans lequel la force est dirigée dans un sens opposé au sens dans lequel ledit élément mobile est manoeuvré pour la stabilisation de l'image ;

   ledit appareil étant caractérisé par

   des moyens de modification (51, 52) destinés à modifier la caractéristique de force prédéterminée desdits moyens de manoeuvre, lesdits moyens de modification (51, 52) effectuant une première opération de modification pour modifier la caractéristique prédéterminée en fonction d'un état de moyens optiques (91, 92) de formation d'image qui forment une image devant être stabilisée par l'appareil de stabilisation d'image, ou une seconde opération de modification pour appliquer la force avec une première caractéristique dans un premier sens et pour appliquer la force avec une seconde caractéristique, différente de la première caractéristique, dans un second sens différent du premier sens.

2. Appareil selon la revendication 1, caractérisé en ce que lesdits moyens de détection (30 à 32) comprennent des moyens (30 à 32) destinés à détecter un déplacement par rapport au centre du mouvement dudit élément mobile, et lesdits moyens de manoeuvre (41 à 43) comprennent des moyens (41 à 43) destinés à appliquer la force en fonction du déplacement détecté.

3. Appareil selon la revendication 1 ou 2, caractérisé en ce que

lesdits moyens de détection (30 à 32) comprennent un moyen de support (4) destiné à supporter de façon mobile ledit élément mobile (2, 3) et des moyens (30 à 32) destinés à détecter un mouvement relatif dudit élément mobile (2), et lesdits moyens de manoeuvre (41 à 43) comprennent des moyens (41 à 43) destinés à appliquer la force en fonction du mouvement relatif.

4. Appareil selon la revendication 3, caractérisé en ce que lesdits moyens de modification (51, 52) comprennent des moyens (51, 52) destinés à modifier en outre la caractéristique prédéterminée en fonction d'un état de réglage de grossissement des moyens optiques (91, 92) pour déterminer le grossissement de l'image.

5. Appareil selon l'une quelconque des revendications précédentes 1 à 4, caractérisé en ce que

lesdits moyens de modification (51, 52) comprennent des moyens (51, 52) destinés à modifier une première caractéristique de fonctionnement et une seconde caractéristique de fonctionnement, dans lequel, dans la première caractéristique de fonctionnement, lesdits moyens de manoeuvre appliquent la force prédéterminée lorsque ledit élément mobile est dans un premier état de déplacement, et dans lequel, dans la seconde caractéristique de fonctionnement, lesdits moyens de manoeuvre appliquent la force prédéterminée lorsque ledit élément mobile est dans un second état de déplacement différent du premier état de déplacement.

6. Appareil selon la revendication 5, caractérisé en ce que lesdits moyens de modification (51, 52) comprennent des moyens (51, 52) destinés à modifier une première caractéristique de fonctionnement et une seconde caractéristique de fonctionnement, dans lequel, dans la première caractéristique de fonctionnement, lesdits moyens de manoeuvre appliquent une force ayant une amplitude prédéterminée lorsque ledit élément mobile est dans un premier état de déplacement, et dans lequel, dans la seconde caractéristique de fonctionnement, lesdits moyens de manoeuvre appliquent une force ayant une amplitude prédéterminée lorsque ledit élément mobile est dans un second état de déplacement différent du premier état de déplacement.

7. Appareil selon l'une quelconque des revendications 1 à 6, caractérisé en ce que

ledit élément mobile (2, 3) comprend un moyen optique (2).

8. Appareil selon l'une quelconque des revendications précédentes 1 à 7, caractérisé en ce que

ledit élément mobile (2, 3) comprend un moyen destiné à corriger un flou de l'image par une manoeuvre.

9. Appareil de stabilisation d'image comprenant un dispositif selon l'une quelconque des revendications 1 à 8.

10. Equipement optique comprenant un appareil selon l'une quelconque des revendications 1 à 9.

FIG. 1

EP 0 396 981 B1

## FIG. 2

## FIG. 3

## FIG. 4

## FIG. 5

CENTER OF MOVEMENT · VIBRATION ANGLE · BARREL OUTER PERIPHERY · TORQUE

## FIG. 6

## FIG. 7

```
                    ┌──────────┐
                    │  START   │
                    └──────────┘
                         │
    ┌────────────────────┤
    │         ┌─────────────────────┐
    │         │      i ← x          │──── 1
    │         └─────────────────────┘
    │                    │
    │        ┌───────────┤◄──────────────────────┐
    │         ┌─────────────────────┐             │
    │         │  ENTRY OF θi DATA   │──── 2       │
    │         └─────────────────────┘             │
    │                    │                        │
    │         ┌─────────────────────┐             │
    │         │     d1 ← ∫θ dt       │──── 3       │
    │         └─────────────────────┘             │
    │                    │                        │
    │         ┌─────────────────────┐             │
    │         │    Δ ← dθ/dt         │──── 4       │
    │         └─────────────────────┘             │
    │                    │                        │
    │         ┌─────────────────────┐             │
    │         │ REFERENCE TO 1i OF LUT│──── 5      │
    │         └─────────────────────┘             │
    │                    │                        │
    │         ┌─────────────────────┐             │
    │         │ REFERENCE TO 2i OF LUT│──── 6      │
    │         └─────────────────────┘             │
    │                    │                        │
    │         ┌─────────────────────┐             │
    │         │   d2 ← θ * LUT - 1i  │──── 7       │
    │         └─────────────────────┘             │
    │                    │                        │
    │         ┌─────────────────────┐             │
    │         │   d3 ← Δ * LUT - 2i  │──── 8       │
    │         └─────────────────────┘             │
    │                    │                        │
    │         ┌─────────────────────┐             │
    │         │ DATA ← d1 + d2 + d3  │──── 9       │
    │         └─────────────────────┘             │
    │                    │                        │
    │                 ╱───────╲         NO         │
    │          10 ── ╱  i = y ? ╲─────────┐        │
    │                ╲─────────╱          │        │
    │                    │                │        │
    │                   YES               ▼        │
    │  13 ┌──────────────────┐   11 ┌──────────────┐
    │     │   Dy ← DATA      │      │   Dy ← DATA  │
    │     └──────────────────┘      └──────────────┘
    │                    │                │        │
    │  14 ┌──────────────────┐   12 ┌──────────────┐
    │     │  Dx → D/A OUTPUT │      │    i ← y     │
    │     └──────────────────┘      └──────────────┘
    │                    │                │        │
    │  15 ┌──────────────────┐            └────────┘
    │     │  Dy → D/A OUTPUT │
    │     └──────────────────┘
    │                    │
    │   NO            ╱───────╲
    └──────────────── ╱ DAMPING OFF ? ╲
              16 ──   ╲─────────────╱
                          │
                         YES
                    ┌──────────┐
                    │   END    │
                    └──────────┘
```

FIG. 8

CENTER OF
MOVEMENT

BARREL OUTER
PERIPHERY

VIBRATION ANGLE

y AXIS

FIG. 9

BARREL OUTER
PERIPHERY

x AXIS

# FIG. 10

# FIG. 11

```
                    ( START )

101 ─  ENTRY OF ENC DATA

102 ─  i ← x

103 ─  j ← 1

104 ─  ENTRY OF θ i DATA

105 ─  REFERENCE TO T,W OF LUT-ji

106 ─  COMPOSITION OF LUT SIGNAL          i ← 2  ─ 108

                 j = 2 ?    NO
107 ─
                   YES

109 ─  Δ ← dθ/dt

110 ─  d1 ← ∫ θ dt

111 ─  d2 ← θ * k1i

112 ─  d3 ← Δ * k2i

113 ─  DATA ← d1 + d2 + d3

                 i = y ?    NO
114 ─
                   YES

117 ─  Dy ← DATA          Dx ← DATA  ─ 115

118 ─  D/A OUTPUT OF Dx AND Dy    i ← y  ─ 116

        NO
                 DAMPING OFF ?
119 ─
                   YES

                  ( END )
```

## FIG. 12

WIDE
ANGLE

TELE-
PHOTO

a

b

c

TORQUE

CENTER OF
MOVEMENT

VIBRATION
ANGLE

BARREL OUTER
PERIPHERY

## FIG. 13A

$\theta$ : LARGE

## FIG. 13B

$\theta$ : SMALL

20

FIG. 14

520 (521)

LUT-ji-T

ENC

| GENERATION OF COEFFICIENT k | CALCULATION 1-k |
81 82

84

85

COEFFICIENT SIGNAL

LUT-ji-W

83

EP 0 396 981 B1

# FIG. 15

FIG. 16

FIG. 17

EP 0 396 981 B1